# FASCICULE DE BREVET EUROPEEN

(11) **EP 0 856 554 B1**
(45) Date de publication et mention de la délivrance du brevet: **16.04.2003**
(21) Numéro de dépôt: 98400142.0
(22) Date de dépôt: 23.01.1998
(51) Int. Cl.: C08L 23/04, B65D 35/00

(54) **Conditionnement injecté constitué d'un matériau plastique présentant une bonne résistance au stress-cracking et matériau utilisable pour sa fabrication**
Spritzgegossener Kunststoffbehälter mit gute Umweltspannungsrisswiderstand und Material zur Herstellung eines solchen
Injection moulded plastic container with good environmental stress crack resistance and material for its fabrication

(30) Priorité: 04.02.1997 FR 9701228
(43) Date de publication de la demande: 05.08.1998
(73) Titulaire: L'OREAL, 75008 Paris (FR)
(72) Inventeur: Barre, Patrice, 92160 Antony (FR)
(74) Mandataire: Boulard, Denis

(56) Documents cités:
- EP-A- 0 103 942
- EP-A- 0 315 238
- EP-A- 0 342 032
- WO-A-96/18662

## Description

La présente invention se rapporte à un mélange thermoplastique et à un conditionnement compressible du type tube, obtenu avec ce mélange. L'invention vise, plus particulièrement, la réalisation, par injection, de tubes en matière plastique, présentant une résistance améliorée au « stress-cracking ». Le conditionnement de l'invention est destiné, notamment, à contenir un produit cosmétique, pharmaceutique, dermo-pharmaceutique ou certains produits alimentaires, et particulièrement adaptée à contenir un produit contenant un ou plusieurs agents tensioactifs.

Le stress-cracking est un terme utilisé pour décrire un phénomène d'attaque chimique d'un produit agissant sur un matériau polymérique de façon peu perceptible lorsque ce matériau n'est pas soumis à une contrainte mécanique. Le contact du matériau avec le produit provoque cependant la formation de micro-fissures. Lorsque le matériau est alors mis sous contrainte - par exemple dans le cas d'un flacon en plastique qui contient un shampooing, en comprimant manuellement le flacon fermé - une propagation des micro-fissures se produit, conduisant à une fragilisation du le matériau et à la rupture d'une paroi, formé par ce matériau. Dans l'exemple considéré, le flacon présenterait donc inévitablement des fuites. Le phénomène de stress-cracking se produit, notamment dans des zones de forte pliure ou dans de zones de thermosoudage, par exemple au fond d'un tube qui a été obtenu par pincement de l'extrémité libre de la paroi compressible du tube, suivi de soudage thermique.

A l'heure actuelle, la majorité des conditionnements utilisés, notamment dans le domaine cosmétique, tels que des tubes ou flacons destinés à contenir une crème ou un shampooing, sont réalisés en matière plastique. Pour leur fabrication, on utilise généralement des polymères thermoplastiques, et plus particulièrement des polyoléfines appropriées, en passant par un procédé d'extrusion ou d'extrusion-soufflage à l'aide d'un équipement industriel classique.

Parmi les polyoléfines thermoplastiques utilisées, on connaît les polyéthylènes basse densité, destinés notamment à la fabrication de tubes. Les tubes en polyéthylène basse densité sont souples, ce qui permet une expulsion aisée du produit contenu dans le tube par simple compression. Cependant, ce type de polyéthylène n'est pas compatible avec un grand nombre de produits chimiques et on observe régulièrement le phénomène de stress-cracking pour des tubes en polyéthylène basse densité, notamment lorsque ceux-ci contiennent un produit comprenant un ou plusieurs tensioactifs. En conséquence, il n'est pas envisageable d'utiliser un tel tube pour le conditionnement d'un shampooing ou d'une émulsion de soins corporels qui contiennent, habituellement, au moins un tensioactif. Ce phénomène de stress-cracking est encore plus prononcé, lorsque les tubes sont réalisés en injection.

Selon un premier objectif, la présente invention vise la réalisation d'un tube compressible du genre précité, en matériau plastique, qui ne présente pas le phénomène de stress-cracking précité, et qui est injectable, à chaud dans un moule approprié par injection d'un matériau thermoplastique.

Un second objectif de la présente invention est de trouver un matériau thermoplastique qui soit suffisamment fluide pour permettre de réaliser, par injection, des conditionnements, tels que des tubes compressibles ou des flacon-tubes, notamment à paroi mince.

On connaît, par exemple par le document EP-A-0 530 782, un mélange thermoplastique, utilisable pour la réalisation d'articles résistant au "stress-cracking", ce mélange étant composé :
a) d'un copolymère linéaire à basse densité d'éthylène avec une oléfine en C₄ à C₈ ayant environ 10 à 15 ramifications à longue chaîne par 1000 atomes de carbone, et
b) d'un polyéthylène à basse densité,
le copolymère étant présent dans le mélange dans une proportion comprise entre 25% et 35%. D'après les exemples de réalisation, ledit mélange est utilisé pour la fabrication d'articles moulés par les techniques de l'extrusion ou de soufflage. Les indices de fluidité des matériaux cités dans ce document ne permettent pas d'utiliser ces matériaux pour la réalisation de tubes en passant par la technique d'injection.

En outre, le document EP-A-0 103 942 décrit des poches fabriquées à partir d'un film en plastique, le film étant constitué d'un mélange comprenant au moins un copolymère d'éthylène/oléfine en C₆ à C₁₀ de densité comprise entre 0,916 et 0,930 g/cm³ et un copolymère d'éthylène/oléfine en C₄ à C₁₀ de densité comprise entre 0,916 et 0,924 g/cm³. Ce mélange n'est pas utilisable pour le moulage, par injection, d'objets à parois minces, car, aux températures de l'injection, il présente une fluidité trop faible.

De même, les mélanges de copolymères d'éthylène/octène avec des copolymères d'éthylène/butène décrits dans le document EP-A- 0 315 028 ne sont pas utilisables au sens de l'invention, car ils présentent une fluidité trop faible aux températures d'injection.

Après de nombreuses recherches, la Demanderesse a découvert un mélange de matériaux thermoplastiques dont les constituants sont compatibles entre eux, mélange qui est facile à injecter dans un moule pour la réalisation de tubes à parois souples et qui présentent une bonne résistance au "stress-cracking".

La présente invention a pour premier objet un conditionnement à résistance améliorée au stress-cracking, comportant une paroi constituée d'un mélange thermoplastique comprenant :
a) un premier copolymère d'éthylène/oléfine en C₄ à C₅, et
b) un second copolymère d'éthylène/polyoléfine en C₆ à C₁₀,

Selon un mode de réalisation préféré, le premier copolymère est un copolymère linéaire d'éthylène basse densité (PEBDL)/butène. Avantageusement, le premier polymère présente une densité inférieure ou égale à 0,910 g/cm³, et de préférence inférieure ou égale à 0,900 g/cm³.

De façon avantageuse, on choisit comme second copolymère un copolymère linéaire d'éthylène basse densité (PEBDL)/octène. De préférence, le second polymère présente une densité comprise entre 0,915 g/cm³ et 0,930 g/cm³.

Dans le cas du premier copolymère, on préfère un copolymère linéaire d'éthylène basse densité comportant des motifs d'éthylène et des motifs de butène, par exemple le produit vendu par la société ENICHEM sous la dénomination commerciale CLEARFLEX MQFO®, et dont la densité est inférieure à 0,910g/cm³.

Dans le cas du second copolymère, un utilise, à titre d'exemple, un copolymère linéaire basse densité d'éthylène comportant des composantes d'octène, tel que le produit DOWLEX 2035® vendu par la société DOW CHEMICAL ou le produit STAMYLEX 08076F vendu par la société DSM.

Conformément à un aspect intéressant de l'invention, le mélange formé par les premier et second copolymères présente un indice de fluidité (norme ISO 1133) d'environ 10 g/10 min. De par cette fluidité relativement élevée, le mélange est particulièrement adapté au moulage, par injection, d'objets à paroi de faible épaisseur.

En ce qui concerne le premier copolymère, avantageusement, il présente un indice de fluidité (norme ISO 1133) compris entre 10 g/10 min et 20 g/10 min (grade 10 à 20), et de préférence d'environ 13 g/10 min.

De façon avantageuse, le second copolymère, quant à lui, présente un indice de fluidité (norme ISO 1133) compris entre 4 g/10 min et 8 g/10 min (grade 4 à grade 8), et de préférence d'environ 6 g/10 min.

Le premier polymère est présent dans le mélange dans une proportion au plus égale à 50%, et de preférence au plus égale à 33%, par rapport au poids total du mélange. Le second polymère est présent dans une proportion au moins égale à 50%, et de préférence au moins égale à 67%, par rapport au poids total du mélange.

Le mélange thermoplastique de l'invention est utilisable, en particulier, pour le moulage, par injection, de tout objet en plastique à paroi mince devant être souple.

Ainsi, selon un mode de réalisation préféré de l'invention, le conditionnement se présente sous la forme d'un tube. Ce tube comporte, avantageusement, une tête relativement rigide constituée d'un épaulement et d'un goulot pourvu d'un orifice de distribution, et une paroi périphérique compressible raccordée à l'épaulement. La paroi périphérique est souple et forme un corps compressible du tube, dans lequel le produit est conditionné. Un bouchon peut être prévu pour boucher l'orifice de distribution pendant la période de stockage. Selon un aspect intéressant de l'invention, la paroi compressible est sensiblement cylindrique, ou de section ovale ou polygonale. Lorsque la section est circulaire, le diamètre externe du tube est compris entre 10 mm et 50 mm, et de préférence entre 25 mm et 35 mm. Avantageusement, la paroi présente une épaisseur comprise entre 0,2 mm et 1,0 mm, et de préférence entre 0,4 mm et 0,7 mm, et plus particulièrement d'environ 0,5 mm.

Dans les conditions de fluidité indiquée du mélange, ainsi de l'épaisseur de paroi envisagée ci-dessus, il est possible de mouler aisément des tubes, dont la longueur de la paroi compressible, mesurée suivant la dimension axiale, est inférieure à 15 cm. De manière préférentielle, pour la paroi compressible, on choisit des dimensions telles que le rapport *longueur de la paroi* / *diamètre de la paroi* du tube, est égal ou inférieur à 4. Selon l'invention, un tel conditionnement est obtenu par injection à chaud dudit mélange dans un moule approprié.

Ainsi, après pincement suivi de soudage de l'extrémité libre de la paroi compressible, opposée à la tête de distribution, on obtient un volume pouvant aller d'environ 5 ml à environ 250 ml, de préférence de 30 ml à 100 ml, et plus particulièrement de 60 ml à 80 ml. Ce volume est destiné à contenir le produit, par exemple un produit cosmétique ou dermatologique. Le volume est variable en fonction de la section du tube et sa longueur.

L'exemple de réalisation donné ci-après en référence aux dessins annexés, à titre purement illustratif et non limitatif, permet de mieux comprendre l'invention.

La figure 1 représente, une vue en élévation, d'un conditionnement conforme à l'invention, avant le soudage du fond.

La figure 2 représente une vue en élévation du conditionnement de la figure 1, après soudage du fond.

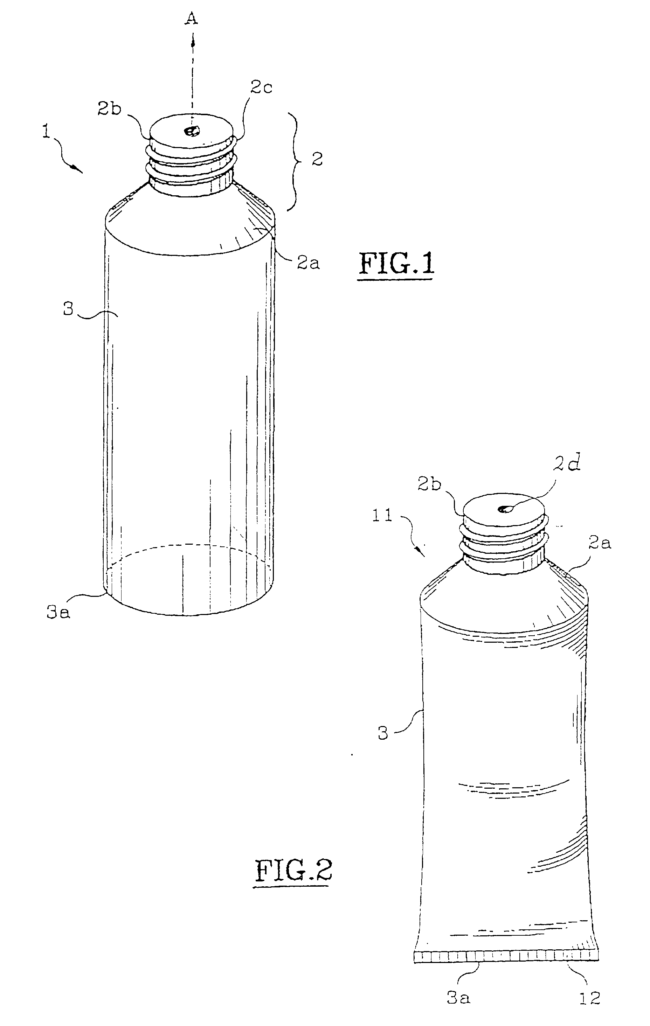

Sur la figure 1, on a désigné par la référence 1 un ensemble de conditionnement conforme à l'invention, présenté sous forme de tube ouvert, tel qu'on l'obtient par injection dans un moule approprié. injection dans un moule approprié. Le tube 1, d'axe A, comporte un corps cylindrique formé par une paroi latérale 3 cylindrique pourvue d'une extrémité ouverte 3a. Du côté opposé à l'extrémité 3a, le corps est surmonté d'une tête de distribution 2 comportant un épaulement tronconique 2a, qui se prolonge par un col cylindrique 2b de diamètre réduit par rapport au diamètre du corps 3. Le col 2b comporte un filetage externe 2c apte à coopérer avec un bouchon de fermeture (non représenté). La tête 2 est pourvue d'un orifice de distribution 2d, de diamètre réduit par rapport au diamètre du col 2b.

Pour remplir le tube 1, on ferme le col 2 par un bouchon, et on retourne l'ensemble, de sorte que l'extrémité ouverte 3a se présente en haut. On coule alors une quantité appropriée de produit dans le tube. A l'aide d'une pince chauffante, on pince l'extrémité libre 3a, et simultanément, on effectue une soudure 12, comme montré sur la figure 2 pour fermer le fond du tube.

### EXEMPLE DE REALISATION

Le tube ouvert 1, comme montré sur la figure 1, est obtenu en injectant dans un moule approprié un mélange de deux copolymères en fusion. La température d'injection est d'environ 200°C. Ce mélange comprend :
- 33% d'un copolymère linéaire de polyéthylène basse densité/butène, grade 13 (vendu par la société ENICHEM sous la dénomination commerciale CLEARFLEX MQFO), et
- 66% d'un copolymère linéaire de polyéthylène basse densité/octène grade 6-7 (vendu par la société DOW CHEMICALS sous la dénomination commerciale DOWLEX 2035E ou le produit STAMYLEX 08076F vendu par la société DSM). Ce tube comporte la tête 2 et la paroi latérale 3. La hauteur de la paroi 3, selon l'axe A, est d'environ 9 cm, l'épaisseur de ladite paroi 3 étant d'environ 0,5 mm.

Après remplissage du tube par le produit, on pince l'extrémité ouverte 3a du tube et on ferme ladite extrémité par thermosoudage. On obtient alors le tube 11 dans sa forme finale, telle que représentée sur la figure 2. On voit que l'extrémité 3a est fermée maintenant, présentant une bande de soudure 12. Du fait de la faible épaisseur de la paroi 3, le tube 11 est facilement déformable, par compression, par un utilisateur qui souhaite prélever une dose de produit.

### MESURE DE LA RESISTANCE AU STRESS-CRACKING

Dix tubes 11, conformes à l'invention, tels que décrits ci-dessus ( voir figure 2) ont été remplis d'une solution aqueuse d'Antarox CO 630 (nonylphénol portant 9 motifs d'oxyéthylène) à 0,3%. Pendant une durée de 24 heures, le tube 11 est conservé dans une étuve à 55 °C. On exerce alors une pression manuelle, de manière diamétrale, sur la paroi latérale 3 du tube, et on observe s'il se produit de fuite de liquide ou non. Dans aucun cas, une fuite de produit n'a été observée.

Le prix de fabrication d'un tube conforme à l'invention est sensiblement inférieur au prix d'un tube fabriqué par extrusion ou extrusion-soufflage.

## Revendications

1. Conditionnement à résistance mécanique améliorée comportant une paroi en matériau plastique constituée d'un mélange comprenant :
a) un premier copolymère d'éthylène/oléfine en C₄ à C₅, et
b) un second copolymère d'éthyléne/polyoléfine en C₆ à C₁₀,
ce conditionnement étant obtenu par injection dudit mélange dans un moule approprié.

2. Conditionnement selon la revendication 1, **caractérisé par le fait que** le premier copolymère est un copolymère linéaire d'éthylène basse densité (PEBDL)/butène.

3. Conditionnement selon la revendication 1 ou 2, **caractérisé par le fait que** le second copolymère est un copolymère linéaire d'éthylène basse densité (PEBDL)/octène,

4. Conditionnement selon l'une des revendications 1 à 3, **caractérisé par le fait que** le premier polymère présente une densité inférieure ou égale à 0,910 g/cm³, et de préférence inférieure ou égale à 0,900 g/cm³.

5. Conditionnement selon l'une des revendications 1 à 4, **caractérisé par le fait que** le second polymère présente une densité comprise entre 0,915 g/cm³ et 0,930 g/cm³.

6. Conditionnement selon l'une des revendications 1 à 5, **caractérisé par le fait que** le mélange présente un indice de fluidité (norme ISO 1133) d'environ 10 g/10 min.

7. Conditionnement selon l'une des revendications 1 à 6, **caractérisé par le fait que** le premier polymère présente un indice de fluidité (norme ISO 1133) compris entre 10 g/10 min et 20 g/10 min (grade 10 à 20).

8. Conditionnement selon l'une des revendications 1 à 7, **caractérisé par le fait que** le second polymère présente un indice de fluidité (norme ISO 1133) compris entre 4 g/10 min et 8 g/10 min (grade 4 à grade 8).

9. Conditionnement selon l'une des revendications 1 à 8, **caractérisé par le fait que** le premier polymère est présent dans le mélange dans une proportion au plus égale à 50%, et de préférence au plus égale à 33%, par rapport au poids total du mélange.

10. Conditionnement selon l'une des revendications 1 à 9, **caractérisé par le fait que** le second polymère est présent dans une proportion au moins égale à 50%, et de préférence au moins égaie à 67%, par rapport au poids total du mélange.

11. Conditionnement selon l'une des revendications 1 à 10, **caractérisé en ce que** la paroi présente une épaisseur comprise entre 0,2 mm et 1,0 mm, et de préférence comprise entre 0,4 mm et 0,7 mm.

12. Conditionnement selon l'une quelconque des revendications 1 à 11, **caractérisé par le fait qu'**il se présente sous forme de tube.

13. Conditionnement selon l'une quelconque des revendications 1 à 12, **caractérisé en ce que** la paroi présente un rapport *longueur*/*diamètre* égal ou inférieur à 4.

14. Conditionnement selon l'une quelconque des revendications 1 à 13, **caractérisé par le fait qu'**il comporte un fond obtenu par pincement de l'extrémité libre de la paroi, suivi de thermo-soudage.

15. Utilisation d'un conditionnement selon l'une quelconque des revendications 1 à 14 pour contenir un produit cosmétique ou dermatologique.

## Claims

1. Package having improved mechanical resistance, having a wall made of a plastic consisting of a blend comprising:
a) a first ethylene/C₄ to C₅ olefin copolymer and
b) a second ethylene/C₆ to C₁₀ olefin copolymer,
this package being obtained by injection-moulding the said blend in a suitable mould.

2. Package according to Claim 1, **characterized in that** the first copolymer is an ethylene/butene linear low-density copolymer (LLDPE).

3. Package according to Claim 1 or 2, **characterized in that** the second copolymer is an ethylene/octene linear low-density copolymer (LLDPE).

4. Package according to one of Claims 1 to 3, **characterized in that** the first polymer has a density of less than or equal to 0.910 g/cm³ and preferably less than or equal to 0.900 g/cm³.

5. Package according to one of Claims 1 to 4, **characterized in that** the second polymer has a density of between 0.915 g/cm³ and 0.930 g/cm³.

6. Package according to one of Claims 1 to 5, **characterized in that** the blend has a melt flow index (ISO 1133 standard) of approximately 10 g/10 min.

7. Package according to one of Claims 1 to 6, **characterized in that** the first polymer has a melt flow index (ISO 1133 standard) of between 10 g/10 min. and 20 g/10 min. (grades 10 to 20).

8. Package according to one of Claims 1 to 7, **characterized in that** the second polymer has a melt flow index (ISO 1133 standard) of between 4 g/10 min. and 8 g/10 min. (grade 4 to grade 8).

9. Package according to one of Claims 1 to 8, **characterized in that** the first polymer is present in the blend in a proportion at most equal to 50%, and preferably at most equal to 33%, with respect to the total weight of the blend.

10. Package according to one of Claims 1 to 9, **characterized in that** the second polymer is present in a proportion at least equal to 50%, and preferably at least equal to 67%, with respect to the total weight of the blend.

11. Package according to one of Claims 1 to 10, **characterized in that** the wall has a thickness of between 0.2 mm and 1.0 mm, preferably between 0.4 mm and 0.7 mm.

12. Package according to any one of Claims 1 to 11, **characterized in that** it is in the form of a tube.

13. Package according to any one of Claims 1 to 12, **characterized in that** the wall has a *length*/*diameter* ratio less than or equal to 4.

14. Package according to any one of Claims 1 to 13, **characterized in that** it has a bottom obtained by pinching the free end of the wall, followed by heat sealing.

15. Use of a package according to any one of Claims 1 to 14 to contain a cosmetic or dermatological product.

## Patentansprüche

1. Verpackung mit verbesserter mechanischer Festigkeit, die eine Wand aus einem thermoplastischen Material umfasst, das aus einem Gemisch besteht, das enthält:
- ein erstes Ethylen/C₄₋₅-Olefin-Copolymer und
- ein zweites Ethylen/C₆₋₁₀-Polyolefin-Copolymer,
wobei die Verpackung durch Spritzgießen des Gemisches in einer geeigneten Form hergestellt wird.

2. Verpackung nach Anspruch 1, **dadurch gekennzeichnet, daß** das erste Copolymer ein lineares Copolymer Ethylen mit niedriger Dichte (LDPE)/Buten ist.

3. Verpackung nach Anspruch 1 oder 2, **dadurch gekennzeichnet, daß** das zweite Copolymer ein lineares Copolymer Ethylen mit niedriger Dichte (LDPE)/Octen ist.

4. Verpackung nach einem der Ansprüche 1 bis 3, **dadurch gekennzeichnet, daß** das erste Polymer eine Dichte von 0,910 g/cm³ oder darunter und vorzugsweise höchstens 0,900 g/cm³ aufweist.

5. Verpackung nach einem der Ansprüche 1 bis 4, **dadurch gekennzeichnet, daß** das zweite Polymer eine Dichte im Bereich von 0,915 bis 0,930 g/cm³ aufweist.

6. Verpackung nach einem der Ansprüche 1 bis 5, **dadurch gekennzeichnet, daß** das Gemisch einen Schmelzindex (Norm ISO 1133) von etwa 10 g/10 min aufweist.

7. Verpackung nach einem der Ansprüche 1 bis 6, **dadurch gekennzeichnet, daß** das erste Polymer einen Schmelzindex (Norm ISO 1133) im Bereich von 10 bis 20 g/10 min (Festigkeit 10 bis 20) aufweist.

8. Verpackung nach einem der Ansprüche 1 bis 7, **dadurch gekennzeichnet, daß** das zweite Polymer einen Schmelzindex (Norm ISO 1133) im Bereich von 4 bis 8 g/10 min (Festigkeit 4 bis 8) aufweist.

9. Verpackung nach einem der Ansprüche 1 bis 8, **dadurch gekennzeichnet, daß** das erste Polymer in dem Gemisch in einem Mengenanteil von höchstens 50 % und vorzugsweise höchstens 33 %, bezogen auf das Gesamtgewicht des Gemisches, vorliegt.

10. Verpackung nach einem der Ansprüche 1 bis 9, **dadurch gekennzeichnet, daß** das zweite Polymer in einem Mengenanteil von mindestens 50 % und vorzugsweise mindestens 67 %, bezogen auf das Gesamtgewicht des Gemisches, vorliegt.

11. Verpackung nach einem der Ansprüche 1 bis 10, **dadurch gekennzeichnet, daß** die Wand eine Dicke von 0,2 bis 1,0 mm und vorzugsweise 0,4 bis 0,7 mm aufweist.

12. Verpackung nach einem der Ansprüche 1 bis 11, **dadurch gekennzeichnet, daß** sie als Tube vorliegt.

13. Verpackung nach einem der Ansprüche 1 bis 12, **dadurch gekennzeichnet, daß** das Verhältnis Länge / Durchmesser der Wand 4 beträgt oder darunter liegt.

14. Verpackung nach einem der Ansprüche 1 bis 13, **dadurch gekennzeichnet, daß** sie einen Boden aufweist, der hergestellt wird, indem das freie Ende der Wand zusammengedrückt und thermisch verschweißt wird.

15. Verwendung einer Verpackung nach einem der Ansprüche 1 bis 14 für ein kosmetisches oder dermatologisches Erzeugnis.
